# EUROPEAN PATENT SPECIFICATION

(11) **EP 1 025 962 B1**
(45) Date of publication and mention of the grant of the patent: **10.09.2003**
(21) Application number: 00300567.5
(22) Date of filing: 26.01.2000
(51) Int. Cl.: B25F 5/02

(54) **Battery-powered, hand guided power tool**
Batteriebetriebene Handwerkzeugmaschine
Outil à main alimenté par batterie

(30) Priority: 29.01.1999 DE 19905085
(43) Date of publication of application: 09.08.2000
(73) Proprietor: Black & Decker Inc., Newark Delaware 19711 (US)
(72) Inventor: Habedank, Winrich, 65582 Diez (DE); Arich, Klaus-Dieter, 65510 Hünstetten-Beuerbach (DE)
(74) Representative: Shaya, Darrin Maurice

(56) References cited:
- DE-A- 19 521 423
- DE-U- 9 311 901
- DE-U- 9 319 361
- US-A- 5 553 675
- US-A- 5 663 011

## Description

The invention relates to a battery-powered, hand-guided power tool, in particular a hammer, in which a rechargeable battery pack is releasably connected to the tool housing of the hammer via a rail-and-channel arrangement, and the battery pack is locked in an operative position on the tool housing in which the electrical contacts of the battery pack and the associated electrical contacts of the power tool are electrically connected along a contact length extending in the direction of the longitudinal extent of the rail-and channel arrangement provided in the tool housing by means of a latch arrangement provided in the tool housing and movable into a release position such that when the latch arrangement is moved into the release position, the battery pack can be moved in the direction of the longitudinal extent of the rail-and-channel arrangement out of the operative position and can be removed from the tool housing.

In a known power tool of that kind (DE 195 21 423 A1), which is in the form of a drilling hammer, the housing-side part of the rail-and-channel arrangement extends on the front side of the portion of the tool housing forming the rear hand grip and substantially at right angles to the longitudinal axis of the tool holder. In the lower part of the hand grip, there is a spring-loaded latch element which, in the locking position and with the battery housing inserted, engages in a latch recess of the battery housing and thus holds the battery pack in its operative position on the tool housing. By drawing the latch element back against the spring force, the battery pack is released and can be removed from the tool housing.

One problem of this known power tool is that the user has to hold the power tool with one hand and use his other hand to move the latch element into the release position to release the battery pack. If in so doing the user has oriented the power tool so that the battery pack is able to come free of the power tool under gravity, there is a risk that the battery pack, which the user is unable to hold at the same time, will drop out in an uncontrolled manner, which can lead to damage to the battery pack and perhaps even to injury. If, on the other hand, the user holds the power tool oriented so that as the latch element is displaced the battery pack is supported on the portion of the housing forming the hand grip, that is, with the tool holder axis directed upwardly, the battery pack will not move from its position as the latch element is drawn back. When the latch element is subsequently released, it will again enter the latch recess of the battery pack, so that the battery pack continues to be connected to the power tool.

Incidentally, if the user inserts the battery pack of the known power tool in the last position mentioned, the electrical contacts of the power tool and the battery pack may come into contact, but the latch element may, unnoticed, fail to lock in the latch recess. Although the power tool can be operated in this position, the battery pack will suddenly become detached from the power tool when this is inclined at a relevant angle, the surprise effect in particular of such an occurrence possibly leading to injury of the user or even to other persons, for instance, if the power tool is being used on a construction site.

The object of the invention is to construct a power tool such that, with greater safety in use, the battery pack can be moved in a simple manner out of its operative position.

To solve that problem, a power tool of the kind mentioned in the introduction is designed in accordance with the invention so that between the battery pack and the tool housing there is arranged a spring, which loads the inserted battery pack in the direction of a displacement movement out of the operative position and the travel of which is greater than the contact length of the contacts, and the restoring force of the spring at the contact length is greater than the weight of the battery pack.

The travel of the spring is preferably not greater than half the length of the battery pack in the region of the rail-and-channel arrangement in the direction of the longitudinal extent of the spring.

In the power tool in accordance with the invention a spring therefore serves to assist removal of the battery pack from the tool housing, in that the spring applies the force that the user would otherwise apply by gripping the battery pack and removing it from the tool housing in a controlled manner by displacing the rails and channels of the rail-and-channel arrangement relative to one another. Just such an action that is not possible with a power tool of that kind described herein because the user needs one hand to hold the power tool and one hand to operate the latch means. The user is therefore able use one hand to actuate the latch arrangement to release the battery pack, with the result that the spring displaces the battery pack a certain amount relative to the tool housing. Thus, if the user subsequently lets go of the latch arrangement the movement of the latch means back in the direction of its locking position does not re-lock battery pack. Furthermore, the displacement of the battery pack by the spring separates the electrical contacts of power tool and battery pack, so that switching on of the power tool by mistake with the battery pack unlocked is safely avoided. By virtue of the restoring force of the spring, such a separation of the contacts is effected even when the power tool is held so that the battery pack has to be displaced vertically upwards. For the rest, the limited travel of the spring means that, when displacement is horizontal, the battery pack is not displaced so far from its operative position along the rail-and-channel arrangement that it becomes automatically detached from the power tool. As is readily apparent, the travel limitation need satisfy only this condition, and is otherwise not a variable that has to be complied with exactly.

After the latch arrangement has been released, and the battery pack has been displaced by the spring, the user can remove the battery pack from the power tool using the hand that has previously been used to operate the latch arrangement.

It should be mentioned that the spring acts, of course, against insertion of the battery pack and movement thereof into its locked operative position, and that it should therefore be of as weak as possible a construction so that insertion of the battery pack is not unduly difficult. By virtue of the construction of the spring in accordance with the invention, it is ensured that insertion of the battery pack without the latch arrangement snapping in results in separation of the electrical contacts of power tool and battery pack, that is, the power tool cannot be operated accidentally in this state.

The construction according to the invention is especially advantageous if the latch arrangement comprise two operating elements arranged on opposite sides of a central plane containing the longitudinal axis of the tool housing. If these two operating elements have to be actuated simultaneously by the user to release the battery pack, it is definitely not possible to use the hand actuating the operating elements to support the battery pack as well, so that the spring provided in accordance with the invention clearly simplifies removal of the battery pack.

In a construction of the invention, the tool-side part of the rail-and-channel arrangement extends at least approximately parallel to the longitudinal axis of the tool holder of the power tool and is located in front of a grip region of the tool housing which grip region extends downwardly in the normal functional position of the power tool. In that case, the spring is mounted at the front side of the grip region. Removal of the battery pack can then be effected in the normal functional position of the power tool in which the tool holder axis is substantially horizontal, in that on movement of the latch arrangement out of their locked position, the spring displaces the battery pack forwards away from the grip region. However, removal of the battery pack can also be effected in a position in which the tool holder is directed upwards because the spring supports the full weight of the battery pack.

In such an arrangement, the spring can be a helical spring, and on its end remote from the grip region there can be a cap, which extends through an opening in the wall of the grip region and the cap has an outwardly directed shoulder which engages behind the edge region of the opening on the inside of the grip region. The spring is thus captively connected to the grip region of the tool housing.

The invention is explained in detail hereinafter with reference to the Figures showing an exemplary embodiment. In the Figures:
Figure 1 shows, in a side view, a drilling hammer with battery pack located in its operative position;
Figure 2 shows, in a partial view, the inserted battery pack and parts of the drilling hammer from Figure 1;
Figure 3 shows a section along the line III-II of Figure 1 through the motor housing of the drilling hammer, but with the omission of the parts of motor and gear arrangement normally present in this region;
Figure 4 is an exploded view of the motor housing, with parts connected thereto, and the battery pack;
Figure 5 shows the parts from Figure 4 in an exploded, different view;
Figure 6 shows a part of one half-shell of the grip housing of the drilling hammer from Figure 1, a half-shell of the housing of the battery pack used and parts of the motor housing;
Figure 7 shows, in a partial view, the engagement of the tool-side contacts and the battery-side contacts when the battery pack is locked in its operative position;
Figure 8 shows the drilling hammer with unlocked battery pack, in a view corresponding to Figure 1;
Figure 9 is a view corresponding to Figure 2, but with the battery pack unlocked;
Figure 10 is a view corresponding to Figure 6, but with the battery pack unlocked;
Figure 11 is a view corresponding to Figure 7, showing the position of the tool-side contacts and the battery-side contacts with the battery pack unlocked.

The drilling hammer illustrated has a tool housing, which is made up from a barrel-like motor housing 1, open towards the rear end, and adjoining this at the rear a grip housing formed from two half-shells 2, 3. An electric motor (not shown) and a pneumatic hammer mechanism, not illustrated, are normally located in the tool housing. Fixed at the front end of the drilling hammer is a tool holder 7 which is fixed in the customary manner on a spindle, not represented; a hammer bit, not represented, is inserted in the tool holder and in operation, in the manner customary for drilling hammers, is loaded by impacts from the hammer mechanism and/or is driven in rotation.

The grip housing 2, 3 forms a grip opening 4, into which a switch actuator 5 for activating the electric motor extends. The motor is powered by a battery pack 50, which is detachably secured to the drilling hammer in a manner to be described hereinafter.

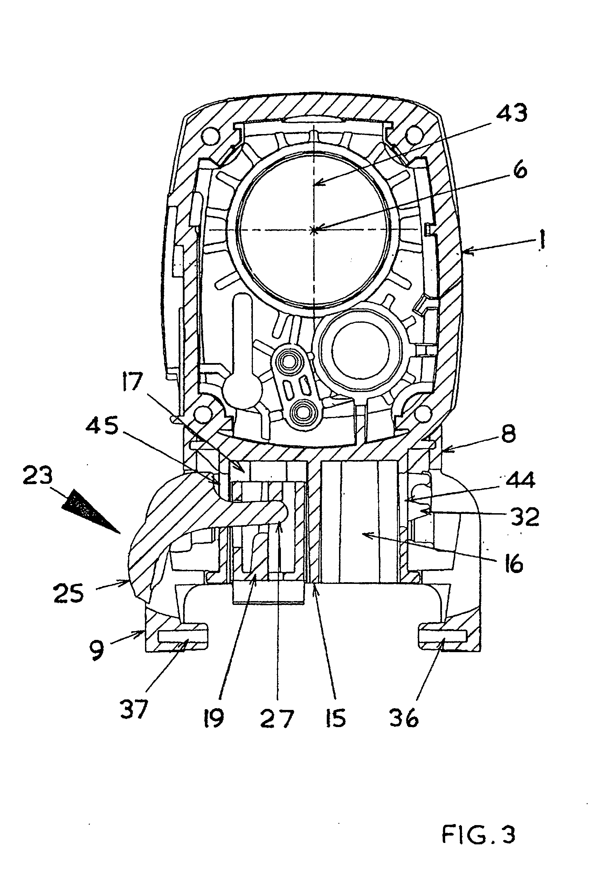

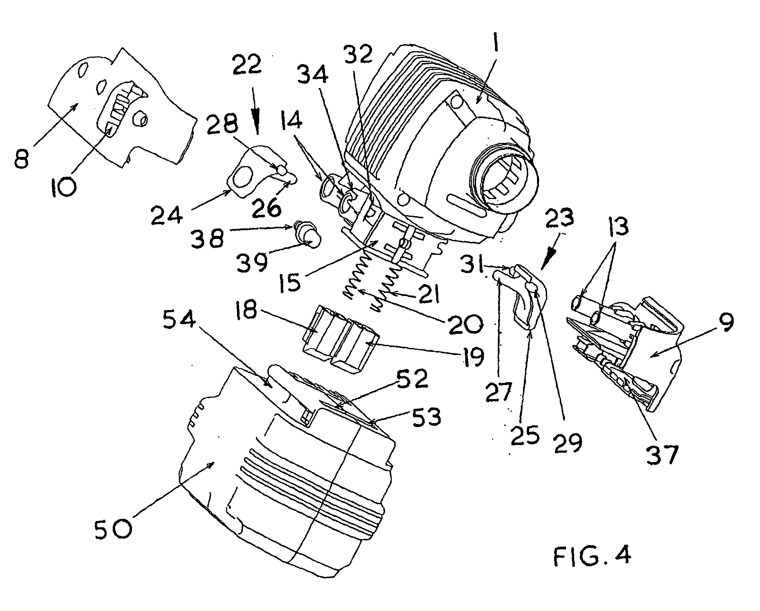

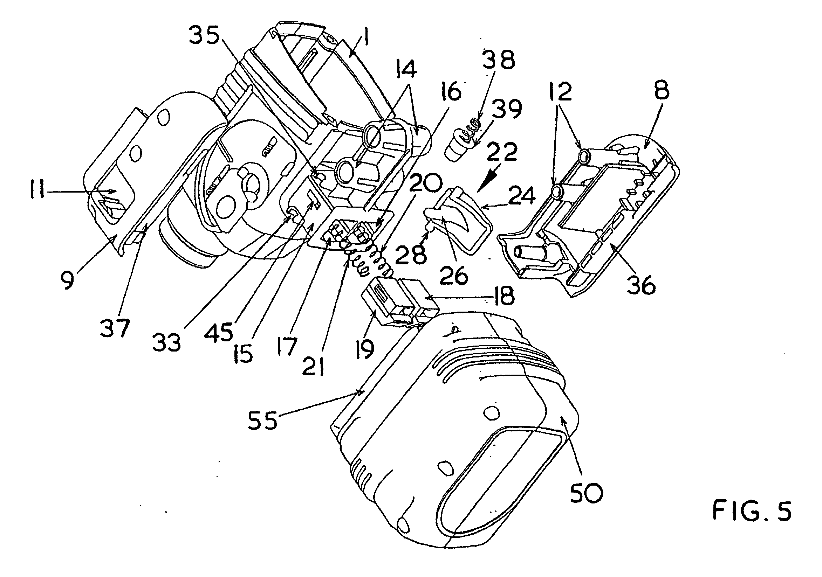

As is especially apparent from Figures 3 to 5, on its underside the motor housing 1 has an integrally formed frame part 15, which at its rear region has integrally formed connecting sleeves 14 and in its front region has two recesses 16, 17 that are separated by a transverse wall that lies in the central plane 43 (Figure 3) of the tool housing 1, 2, 3, in which also the longitudinal axis 6 of the tool housing that coincides with the axis of rotation of the tool holder 7 is located.

Compression springs 20, 21 and latch elements 18, 19 are inserted in the recesses 16, 17, which are in the form of blind bores. In the outer side walls of the recesses 16, 17 there is a respective slit-shaped through-opening 44, 45. Into each of these through-openings extends the inner arm 26, 27 respectively of an operating element 22, 23, respectively, which is in the form of a substantially L-shaped two-armed lever and formed in one piece therewith has a respective front pivot pin 28, 29 and a respective rear pivot pin 30, 31. The pivot pins 26, 28 and 29, 31 are snapped into front and rear bearing sleeves 32, 24 and 33, 35 respectively, integrally formed with the frame part 15 and open towards the outside, so that the operating element 22, 23 is pivotally mounted on the frame part.

Secured laterally to the frame 15 are covers 8, 9, which have a respective through-opening 10, 11 into which the respective outer arm 24, 25 of the respective operating element 22, 23 extends, so that the outer surface of that arm 24, 25 is accessible from the outside. The covers 8, 9 have inwardly projecting connecting sockets 12, 13, which in the mounted state extend into the connecting sleeves 14. By means of screws, not illustrated, inserted in the connecting sockets, which screws come into engagement with internal threads in the connecting sleeves, the covers 8, 9 are releasably held on the frame part, and they cover in particular the pivot pins 28, 30, and 29, 31 of the operating elements 22, 23 respectively and the associated bearing sleeves 32, 34 and 33, 35 respectively and constitute a visual downward continuation of the motor housing 1.

It will be noted that, by means of this construction, the latch elements 18, 19 can be very easily mounted and held within the recesses 16, 17. If a spring and the associated latch element is inserted into the recess, then, with the latch element fixedly held, the inner arm 26, 27 of the associated operating element 22, 23 is pushed through the respective slit-shaped through-opening 44, 45 in the side wall of the respective recess 16, 17 and into a lateral slit-shaped opening of the respective latch element 18, 19. Just the fact of this engagement prevents the compression spring 20, 21 from being able to push its associated latch element 18, 19 out of the recess 16, 17 respectively. The pivot pins 28, 30 and 29, 31 of the operating element 22, 23 respectively are snapped into the bearing sleeves 32, 34 and 33, 35 respectively, so that the operating elements 22, 23 are positioned in their position apparent in Figure 3 for the operating element 23. In that position, the compression spring 20, not illustrated in Figure 3, presses the latch element 19 downwards and against the inner arm 27 of the operating element 23 extending into the opening in the latch element 19, so that the operating element 23 is biased, causing it to pivot clockwise. This pivoting movement is limited by contact of the inner arm 27 against the lower edge of the slit-shaped through-opening 45 provided in the frame part 15, that is, the latch element 19 is able to protrude downwards out of the recess 17 only as far as the lowered latched position illustrated in Figure 3. The same applies to the latch element 18, not illustrated in Figure 3, which is inserted in the recess 16 and co-operates with the operating element 22.

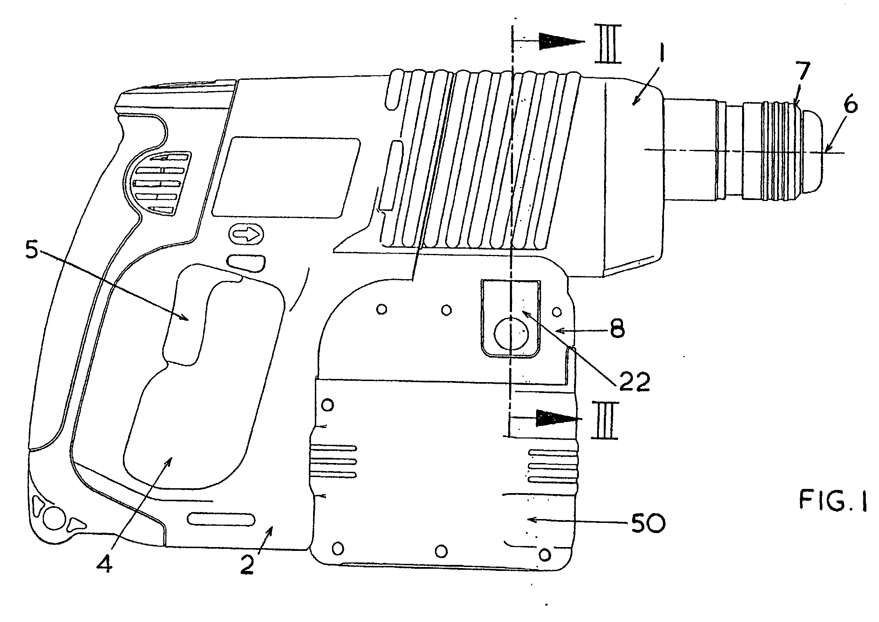

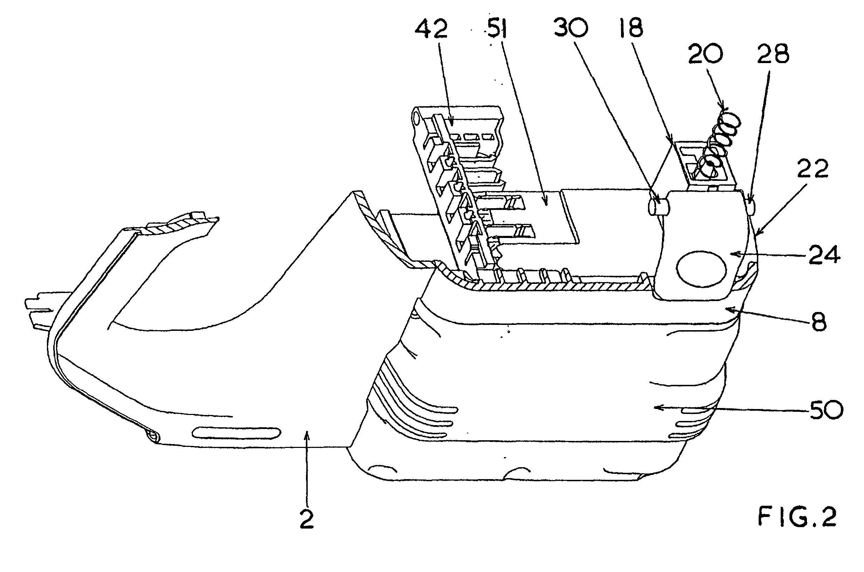

At their lower ends, the covers 8, 9 form inwardly projecting rails 36, 37 extending at least approximately parallel to the longitudinal axis 6, which serve as guide and retaining rails for pushing on and mounting the battery pack 50. On its upper side, the battery pack has channels 54, 55 of complementary form, which are open at the rear end so that the front ends of the rails 36, 37 enter the channels 54, 55 and the battery pack 50 can be pushed along the rails 36, 37 to an end position in which, as is apparent from Figures 1 and 2, the rear wall of the battery pack 50 lies against a front surface formed by the two half-shells 2, 3 of the grip housing. The latch elements, are of wedge-shaped construction at their lower ends and as the battery pack 50 is inserted are pressed by the upper surface thereof, against the action of the compression springs 20, 21, back into the recesses 16, 17. In the end position of the battery pack the latch elements 18, 19 snap into latch recesses 52, 53 formed in the upper surface of the battery pack 50 and lock the battery pack 50 against forward displacement out of this operative or end position.

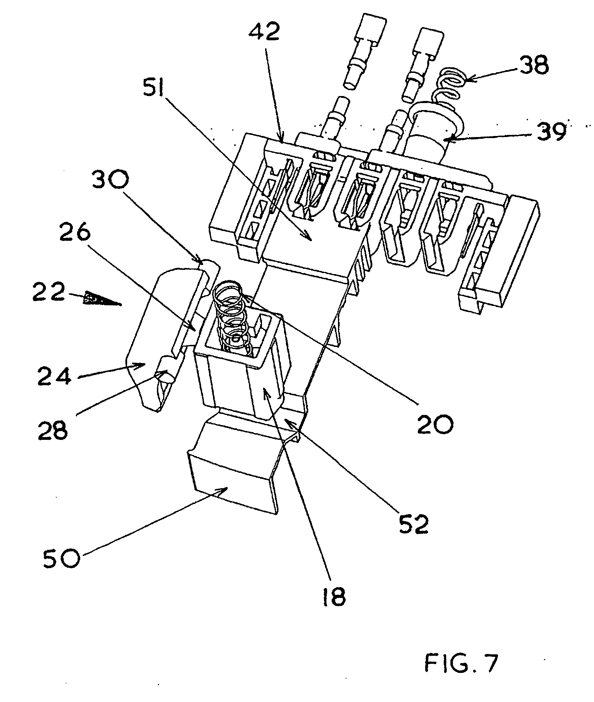

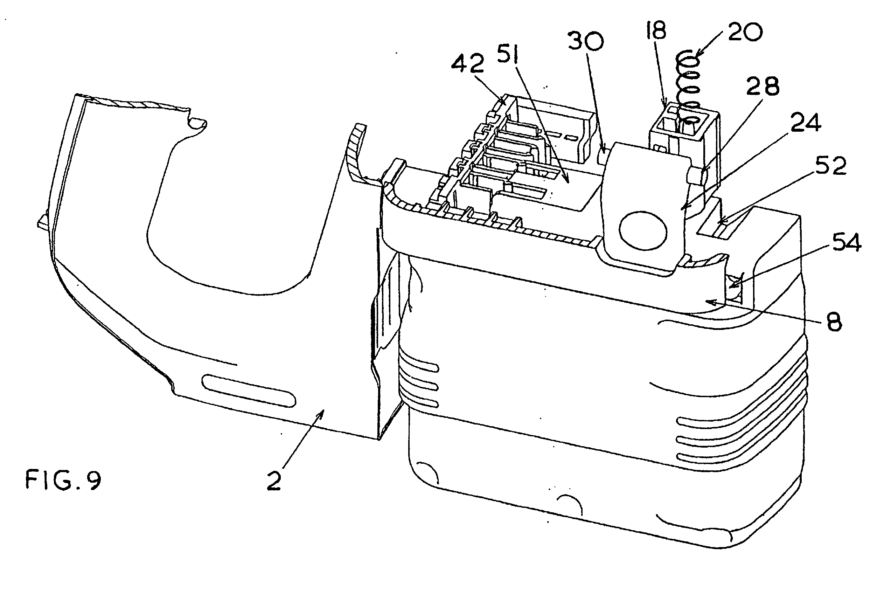

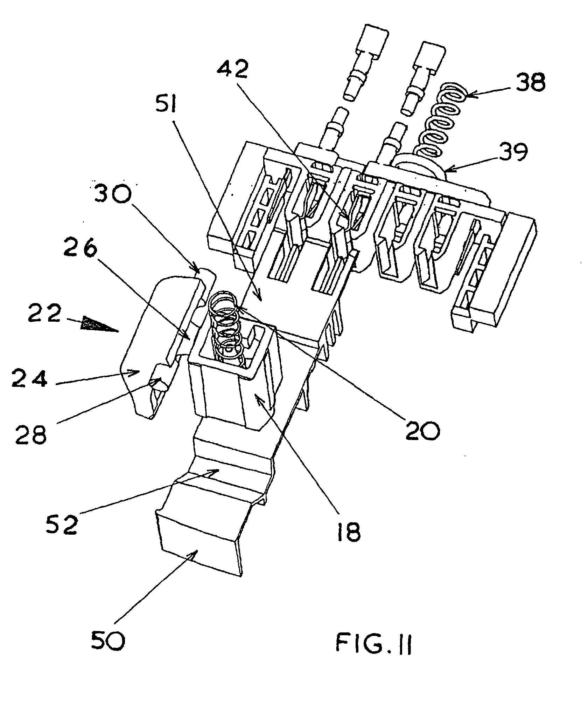

As is apparent from Figures 2, 6, 9 and 10, behind the frame part 15, contacts 42, also illustrated in Figures 7 and 11, are fastened to the motor housing 1, and are electrically connected via connections to the different components inside the tool housing. These contacts 42 are arranged in a frame arrangement open towards the front. Corresponding contacts 51 are located on the upper side of the battery pack 50 in the rear region thereof, and are mounted in a frame arrangement open at the rear. In the position shown in Figures 2, 6 and 7, that is, the locked or operative position of the battery pack 50 according to Figures 1, 2 and 6, the battery side contacts are in electrically conducting engagement with the tool-side contacts 42 over a contact length.

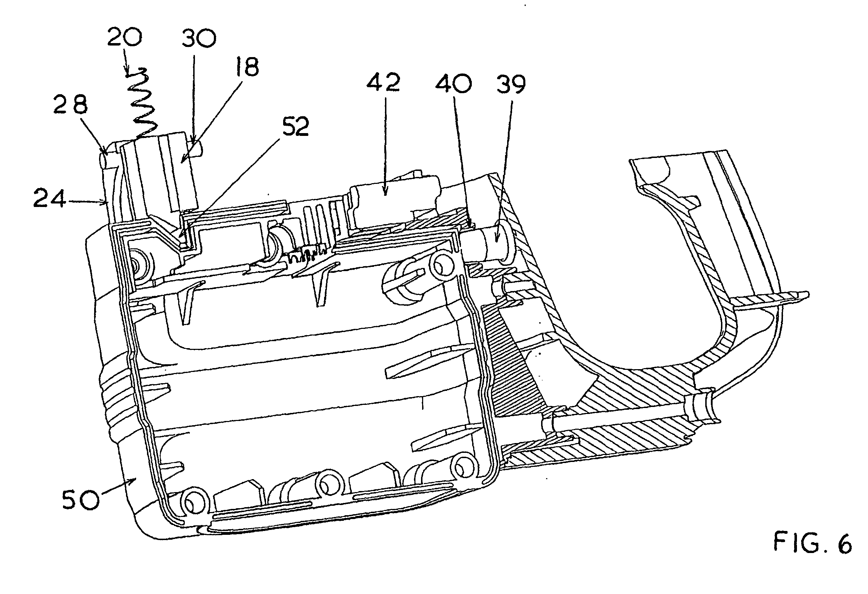

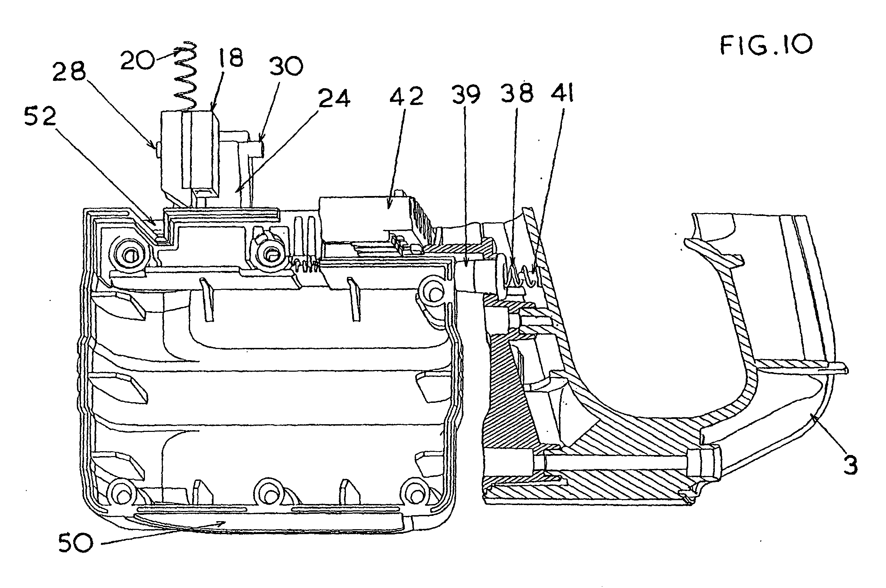

In the upper end region of the bearing surface of the tool housing for the rear end face of the battery pack 50, there is an aperture 40, through which an approximately thimble-shaped cap 39 extends, having at its rear end an outwardly directed shoulder, the external diameter of which is larger than the diameter of the aperture 40, so that the cap 39 is unable to escape from the housing through the aperture 40. The cap 39 is biased by a helical spring 38, which sits on a supporting pin 41 (See Figure 10) formed in one piece with the wall of the grip housing 1, lying opposite the aperture 40. The helical spring bears against this wall of the grip housing to effect a forward displacement of the cap, that is, to effect a displacement towards a position in which the shoulder of the cap 39 bears against the wall region surrounding the aperture 40. As shown in Figure 6, with the battery pack 50 inserted and located in the locked or operative position, the cap 39 is pushed as far as possible into the tool housing with the helical spring 38 fully compressed.

In order to separate the battery pack 50 in its operative position from the drilling hammer, the user grips the covers 8, 9 and the front region of the battery pack 50 with one hand from the front, and presses, for instance with his thumb and forefinger, the outer arms 24, 25 of the operating elements 22 and 23 inwards. This causes the operating elements to pivot about their pivot pins 28, 30 and 29, 31 respectively and the latch elements 18, 19 are lifted up, against the force of the compression springs 20, 21, that is, they are moved further into the recesses 16, 17, until the lower ends of the latch elements 18, 19 are retracted from the latch recesses 52, 53 of the battery pack 50. As the latch elements 18, 19 release the battery pack 50, the battery pack 50 is pressed as a consequence of the force of the helical spring 38, which presses the cap 39 against the battery pack 50, forwardly along the rails 36, 37. Just a slight displacement is sufficient to ensure that the latch elements 18, 19 do not re-enter the latch recesses 52, 53 of the battery pack 50 after the operating elements 22, 23 have been released. Instead, the latch elements abut the upper surface of the battery pack 50. The helical spring 38 not only effects such a slight displacement, but on retraction of the latch elements 18, 19 shifts the battery pack 50 such a distance along the rails 36 and 37 provided on the tool housing that the battery-side contacts 51 safely disengage from the tool-side contacts 42. Accordingly, the displacement of the battery pack 50 by the helical spring 38 effects not only a mechanical disengagement of the battery pack 50, but also causes the electrical connection between battery pack 50 and power tool to be safety interrupted. For that purpose, the spring 38 has a restoring force that is greater than the weight of the battery pack 50, so that a corresponding displacement of the battery pack can be reliably effected. Thus, even when the user unlocks the battery pack 50 with the tool holder 7 of the power tool pointed upwardly the battery pack 50 is moved by the spring 38 against gravity along the vertically positioned rails 36, 37. Moreover, the travel of the spring 38 between the fully compressed position shown in Figure 6 and the position in which the outwardly directed shoulder of the cap 39 is supported against the wall region of the tool housing surrounding the aperture 40 (Figure 10), is greater than the contact length over which the battery-side contacts 51 in the operative position of the battery pack 50 shown in Figures 1, 2 and 6 are in engagement with the tool-side contacts 42: As the latch elements 18, 19 are displaced from the locked position shown in Figure 6 into the release or retracted position shown in Figure 10, in any orientation of the power tool the spring 38 accordingly reliably effects a displacement of the battery pack 50 along the rails 36, 37, such that a separation of battery-side and tool-side contacts 51, 42 is effected.

For the rest, the travel of the spring 38 between the fully compressed position (Figure 6) and the position according to Figure 10, in which the outwardly directed shoulder of the cap 39 rests against the wall region surrounding the aperture 40, should not be so large that the battery pack 50 is moved into a position in which it is no longer reliably held on the rails 36, 37, but is virtually "shot out" of its mounting on the rails. It is therefore advantageous if the travel of the spring 38 is no greater than half the length of the battery pack in the region of the rail-and-channel arrangement 36, 37, 54, 55 in the direction of the longitudinal extent of the channels 54, 55, so that, in the state displaced by the spring 38, the battery pack 50 still sits on at least half the longitudinal extent of the rails 35, 36.

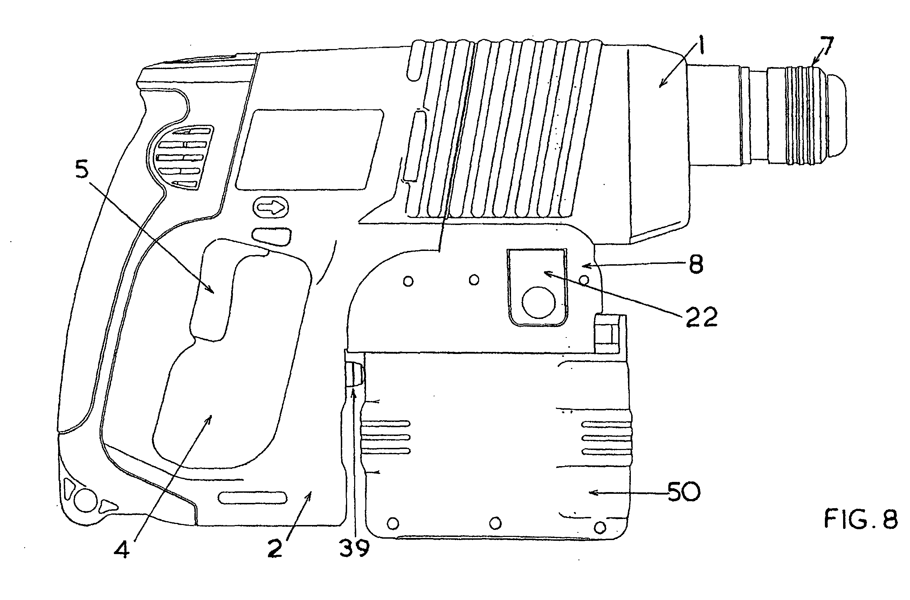

When the user inserts the battery pack 50 into the drilling hammer, he has to displace the cap 39 suitably backwards, and compress the spring 38 to move the battery pack 50 into the position in which the latch elements 18, 19 lock into the latch recesses 52, 53 of the battery pack 50. In that position, the battery-side contacts 51 are then also electrically connected to the tool-side contacts 42. If, however, the user fails to push in the battery pack 50 until the latch elements lock in, on being released the battery pack will be displaced by the action of the spring 38 into the position shown in Figures 8 and 10, so that this error is obvious to the user. Moreover, there is no chance whatsoever that the battery pack 50 can be electrically connected with the drilling hammer and can set this in operation when the battery pack 50 is not locked in its operative position by engagement of the latch elements 18, 19.

## Claims

1. Battery-powered, hand-guided power tool, in particular a hammer, in which a rechargeable battery pack (50) is releasably connected to the housing (1, 2, 3) of the hammer via a rail-and-channel arrangement (36, 37, 54, 55) and the battery pack is locked in an operative position on the housing (1, 2, 3) in which the electrical contacts (51) of the battery pack (50) and the associated electrical contacts (42) of the power tool are electrically connected along a contact length extending in the longitudinal direction of the rail-and-channel arrangement (36, 37, 54, 55), by means of a latch arrangement (18, 19) provided in the tool housing (1, 2, 3) and movable into a release position, such that when the latch arrangement (18, 19) is moved into the release position, the battery pack (50) can be moved in the direction of the longitudinal extent of the rail-and-channel arrangement (36, 37, 54, 55) out of the operative position and can be removed from the tool housing, **characterised in that** between the battery pack (50) and the tool housing (1, 2, 3) there is arranged a spring (38) which loads the inserted battery pack (50) in the direction of a displacement movement out of the operative position and the travel of the spring is greater than the contact length of the contacts (42, 51) and the restoring force of the spring (38) at the contact length is greater than the weight of the battery pack (50).

2. Power tool according to claim 1, **characterised in that** the travel of the spring (38) is not greater than half the length of the battery pack (50) in the region of the rail-and-channel arrangement (36. 37, 54, 55) in the direction of the longitudinal extent of the rail-and-channel arrangement (36, 37, 54, 55).

3. Power tool according to claim 1 or 2, **characterised in that** the latch arrangement (18, 19) comprise two operating elements (22, 23) arranged on opposite sides of a central plane (43) containing the longitudinal axis (6) of the tool housing (1, 2, 3).

4. Power tool according to any one of claims 1 to 3. **characterised in that** the tool-side part (36, 37) of the rail-and-channel arrangement (36, 37, 54, 55) extends at least approximately parallel to the longitudinal axis (6) of the tool holder (7) of the power tool and is located in front of a grip region (2, 3, 4) of the tool housing (1, 2, 3) which grip region extends downwardly in the normal functional position of the power tool, and the spring (38) is mounted at the front side of the grip region (2, 3).

5. Power tool according to claim 4, **characterised in that** the spring is a helical spring (38), and on its end remote from the grip region (2, 3) there is a cap (39), which extends through an opening (40) in the wall of the grip region (2, 3) and the cap has an outwardly directed shoulder which engages behind the edge region of the opening (40) on the inside thereof.

## Patentansprüche

1. Batteriegetriebenes, handgeführtes Werkzeug, insbesondere Hammer, bei dem eine wiederaufladbare Batterieeinheit (50) über eine Schienen- und Nutanordnung (36, 37, 54, 55) lösbar mit dem Gehäuse (1, 2, 3) des Hammers verbunden und die Batterieeinheit in einer Betriebsstellung, in der die elektrischen Kontakte (51) der Batterieeinheit (50) und die zugehörigen elektrischen Kontakte (42) des Werkzeugs entlang einer sich in Längsrichtung der Schienen- und Nutanordnung (36, 37, 54, 55) erstreckenden Eingriffsstrecke elektrisch verbunden sind, mittels einer Riegelanordnung (18, 19) am Gehäuse (1, 2, 3) verriegelt ist, die am Gehäuse (1, 2, 3) vorgesehen und in eine Freigabestellung bewegbar ist, so dass die Batterieeinheit (50) bei Bewegung der Riegelanordnung (18, 19) in die Freigabestellung in Richtung der Längserstreckung der Schienen- und Nutanordnung (36, 37, 54, 55) aus ihrer Betriebsstellung bewegt und vom Werkzeuggehäuse abgenommen werden kann, **dadurch gekennzeichnet, dass** zwischen der Batterieeinheit (50) und dem Werkzeuggehäuse (1, 2, 3) eine Feder (38) angeordnet ist, die die eingesetzte Batterieeinheit (50) in Richtung einer Verlagerungsbewegung aus der Betriebsstellung belastet und deren Hub größer als die Eingriffsstrecke der Kontakte (42, 51) ist, und dass die Rückstellkraft der Feder (38) in Länge der Eingriffsstrecke größer ist als das Gewicht der Batterieeinheit (50).

2. Werkzeug nach Anspruch 1, **dadurch gekennzeichnet, dass** der Hub der Feder (38) nicht größer als die Hälfte der Länge der Batterieeinheit (50) im Bereich der Schienen- und Nutanordnung (36, 37, 54, 55) in Richtung der Längserstreckung der Schienen- und Nutanordnung (36, 37, 54, 55) ist.

3. Werkzeug nach Anspruch 1 oder 2, **dadurch gekennzeichnet, dass** die Riegelanordnung (18, 19) zwei an gegenüberliegenden Seiten einer die Längsachse (6) des Werkzeuggehäuses (1, 2, 3) enthaltenden Mittelebene (43) angeordnete Betätigungselemente (22, 23) aufweist.

4. Werkzeug nach einem der Ansprüche 1 bis 3, **dadurch gekennzeichnet, dass** der werkzeugseitige Teil (36, 37) der Schienen- und Nutanordnung (36, 37, 54, 55) sich zumindest in etwa parallel zur Längsachse (6) der Werkzeugaufnahme (7) des Werkzeugs erstreckt und vor einem Griffbereich (2, 3, 4) des Werkzeuggehäuses (1, 2, 3) angeordnet ist, der sich in normaler Funktionsstellung des Werkzeugs nach unten erstreckt, und dass die Feder (38) an der Vorderseite des Griffbereichs (2, 3) befestigt ist.

5. Werkzeug nach Anspruch 4, **dadurch gekennzeichnet, dass** die Feder eine Schraubenfeder (38) ist und dass auf ihrem dem Griffbereich (2, 3) fernen Ende eine Kappe (39) sitzt, die sich durch eine Öffnung (40) in der Wand des Griffbereichs (2, 3) erstreckt und eine nach außen gerichtete Schulter hat, die den Randbereich der Öffnung (40) an deren Innenseite hintergreift.

## Revendications

1. Outil électrique portatif alimenté par une batterie, en particulier un marteau perforateur, dans lequel une unité de batterie rechargeable (50) est connectée de façon amovible, au logement (1, 2, 3) du marteau par l'intermédiaire d'une conformation de rails et de canal (36, 37, 54, 55) et l'unité de batterie est verrouillée dans une position de fonctionnement, sur le logement (1, 2, 3), dans laquelle les contacts électriques (51) de l'unité de batterie (50) et les contacts électriques associés (42) de l'outil électrique sont électriquement reliés suivant une longueur de contact s'étendant dans la direction longitudinale de la conformation de rails et de canal (36, 37, 54, 55), au moyen d'une conformation de verrouillage (18, 19) prévue dans le logement de l'outil (1, 2, 3) et susceptible d'être placée dans une position de libération, de sorte que, lorsque la conformation de verrouillage (18, 19) est placée en position de libération, l'unité de batterie (50) peut être déplacée dans la direction de l'étendue longitudinale de la conformation de rail et de canal (36, 37, 54, 55) pour quitter la position de fonctionnement et peut être retirée du logement de l'outil, **caractérisé en ce que** entre l'unité de batterie (50) et le logement de l'outil (1, 2, 3) est disposé un ressort (38) qui sollicite l'unité de batterie insérée (50) dans la direction d'un déplacement pour quitter la position de fonctionnement, la course du ressort est supérieure à la longueur de contact des contacts (42, 51) et la force de rappel du ressort (38) à la longueur de contact est supérieure au poids de l'unité de batterie (50).

2. Outil électrique selon la revendication 1, **caractérisé en ce que** la course du ressort (38) n'est pas supérieure à la moitié de la longueur de l'unité de batterie (50), dans la région de l'aménagement de rails et de canal (36, 37, 54, 55), dans la direction de l'étendue longitudinale de la conformation de rail et de canal (36, 37, 54, 55).

3. Outil électrique selon la revendication 1 ou 2, **caractérisé en ce que** l'aménagement de verrouillage (18, 19) comprend deux éléments fonctionnels (22, 23) disposés de part et d'autre d'un plan central (43) contenant l'axe longitudinal (6) du logement de l'outil (1, 2, 3).

4. Outil électrique selon une quelconque des revendications 1 à 3, **caractérisé en ce que** la partie du côté de l'outil (36, 37) de l'aménagement de rail et de canal (36, 37, 54, 55) s'étend au moins approximativement parallèlement à l'axe longitudinal (6) du porte-outil (7) de l'outil électrique et est disposée devant une région de préhension (2, 3, 4) du logement de l'outil (1, 2, 3) laquelle région de préhension s'étend vers le bas dans la position fonctionnelle normale de l'outil électrique, et le ressort (38) est monté sur le côté avant de la région de préhension (2, 3).

5. Outil électrique selon la revendication 4, **caractérisé en ce que** le ressort est un ressort hélicoïdal (38) et, sur son extrémité éloignée de la région de préhension (2, 3), est disposé un capuchon (39), qui s'étend à travers une ouverture (40) de la paroi de la région d'agrippement (2, 3), et le capuchon a un épaulement dirigé vers l'extérieur qui porte derrière la région du bord de l'ouverture (40), à l'intérieur de celle-ci.
